# EUROPEAN PATENT SPECIFICATION

(11) **EP 1 744 497 B1**
(45) Date of publication and mention of the grant of the patent: **23.01.2008**
(21) Application number: 05106489.7
(22) Date of filing: 14.07.2005
(51) Int. Cl.: H04L 12/56

(54) **Method for managing a plurality of virtual links shared on a communication line and network implementing said method**
Verfahren zum Verwalten einer Vielzahl von virtuellen Verbindungen zur gemeinsamen Nutzung auf einer Verbindungsleitung und Netzwerk zur Implementierung dieses Verfahrens
Procédé de géstion d'une pluralité des liaisons virtuelles pour partage d'une liaison de communication et réseau pour la mise en oeuvre de ce procédé

(43) Date of publication of application: 17.01.2007
(73) Proprietor: INTERUNIVERSITAIR MICROELEKTRONICA CENTRUM VZW, 3001 Leuven (BE); UNIVERSITE LIBRE DE BRUXELLES, 1050 Bruxelles (BE)
(72) Inventor: Leroy, Anthony, 1050 Bruxelles (BE); Catthoor, Franky, 9140 Temse (BE)
(74) Representative: Sarlet, Steven Renaat Irène

(56) References cited:
- US-A- 5 485 455
- US-A1- 2002 109 879

## Description

The present invention relates to a method for managing a plurality of virtual links shared on a communication line according to the preamble of claim 1. The invention further relates to a digital network according to claim 7, which enables an implementation of the method of claim 1.

In most Networks-on-Chip (NoC), IP-blocks are connected to their own router through a network interface. Routers are interconnected to each other by point-to-point communication lines to form a given network topology. The role of these routers is to forward the data from the source to the destination IP. The connection between source and destination is termed a virtual circuit or a virtual link. The communication lines extending between the routers are formed by a number of physical single bit wide connections. This number defines the bit width of the line. State-of-the-art NoCs currently exploit Time-Division Multiplexing (TDM) to share network resources among virtual circuits, but this typically results in high energy overhead.

From US 2002/0109879 A1 a method and system are known for providing network configuration and control information for an optical network. A spatial light modulator is used to modulate the optical signal.

From US-A-5,485,455 an apparatus and method are known for establishing "virtual connections" through a packet switched data communications network.

It is an aim of this invention to provide a method for managing a plurality of virtual links shared on a communication line with which power consumption can be reduced.

This aim is achieved according to the invention with the method comprising all steps of claim 1.

The method of the invention is applicable to networks on chip, networks on a package and any other digital networks known to the person skilled in the art. However, for the sake of simplicity the advantages are clarified below for networks on chip only.

The method of the invention is used for managing a plurality of virtual links from at least two different sources shared on a physical communication line extending between a first unit and a second unit. This communication line has a total bit width which is the number of physical single bit wide connections or "wires" between the first and second units. The method of the invention comprises the steps of:
a) establishing a first situation in which the total bit width of the communication line is at least partly occupied by a first group of one or more virtual links,
b) configuring a second situation in which a first portion of the total bit width is allocated to the first group of one or more virtual links and a second portion of the total bit width is allocated to a second group of one or more virtual links, the second portion non-overlapping the first portion,
c) switching from the first situation to the second situation.

As used herein, the wording "group of one or more virtual links" is intended to mean that the group can comprise a single virtual link as well as a plurality of virtual links. As a result, the first and second groups mentioned above can each be formed by a single virtual link or a plurality of virtual links.

An analysis of the problem of the prior art has shown that in the known TDM approach, the high power consumption is amongst others caused by frequently accessing the so-called Output Reservation Table (ORT), which is a configuration memory which keeps tracks of which time-slots are assigned to which connection.

The method of the invention makes it possible to digit-serialize a virtual link on a portion of the physical connection, i.e. on a sub-group of wires. For this virtual link, the switch configuration is set once and for all at the connection set-up and no configuration memory is therefore needed for this virtual link. As a result, with the method of the invention, at least the number of accesses to the configuration memory can be reduced, which can result in less power consumption.

In some embodiments of the invention, the configuration memory can be reduced or even be dispensed with, which can lead to a reduced network area. Furthermore, the reduction of accesses to the configuration memory has the advantage that circuit set-up time can be reduced.

The method of the invention preferably further comprises the step of determining the first and second portions of the total bit width on the basis of a bandwidth which is required on the first and second groups of virtual links. In this way, optimal use of the available bit width can be ensured.

As mentioned above, the first and second group can each comprise one virtual link or a plurality of virtual links. In case the first or second group comprises a plurality of virtual links, these can be shared on the first/second portion of the total bit width using time-division multiplexing. In other words, the following situations can for example arise with the method of the invention:
- A plurality of virtual links are shared on the physical connection line, each being allocated its own portion of the total bit width. This way of managing the links is hereinafter called "spatial division multiplexing" (SDM). An example for an 8-bit wide connection line is that four wires are allocated to link A, two to link B and one wire to links C and D.
- A first group of virtual links is shared on a first portion of the total bit width of the physical connection line using TDM and a second group of virtual links is shared on a second portion of the total bit width using SDM. This solution can be called a "hybrid multiplexing method". So for example for an 8-bit wide connection line, four wires are allocated to links A and B which are time-division multiplexed, two wires are allocated to link C and two wires are allocated to link D (i.e. C and D are shared on four wires using SDM).

In a preferred embodiment of the invention, it is made sure that upon switching from one situation to the other the bit width occupied by the already present group of virtual links is reduced if necessary to make space for the newly added virtual link(s). Likewise, it is preferred that upon termination of a virtual link or a group of virtual links, the bit width occupied by the remaining group of virtual links can be enlarged. In this way, the occupation of the total bit width can be optimised.

The digital network of the invention, which enables implementation of the method described above, comprises a physical communication line extending between a first unit and a second unit, which can for example be routers, but also other units. The communication line has a total bit width which is the number of physical single bit wide connections between the first and second units. The network further comprises a control unit for managing the sharing of a plurality of virtual links from at least two different sources on the physical communication line. This control unit manages the sharing according to a predetermined switching granularity m, which is the smallest number of single bit wide connections which can be allocated to a group of virtual links. In the network of the invention, this switching granularity m is smaller than a number n, which is the bit width of the input ports and output ports of the first and second units. So for example if the physical communication line is a single n-bit wide line extending between one port of the first unit and one port of the second unit, the control unit can allocate the n wires of the line per m wires to a group of virtual links. The physical communication line between the first and second units can however also be formed by a plurality of n-bit wide lines or even a plurality of lines of different bit width. Preferably, the switching granularity m is 1, so that the occupation of the bit width can be optimised.

The control unit manages the sharing of virtual links on the communication line by means of a routing algorithm. The control unit can be both a local unit which is provided in the first and/or the second unit and/or any other (switching) unit of the network, or a group control unit which controls a group of (switching) units, or a central unit which overviews the whole network.

In a preferred embodiment of the network of the invention, with the number of input/output ports being p, the first and second units comprise (pxm)x(pxm) crossbars. This means that the first and second units comprise full crossbars in which each wire at input side is connected to each wire at output side.

In another preferred embodiment of the invention, the first and second units comprise non-blocking multiple stages interconnection network switches (MIN switches). In such a MIN switch, each wire at input side is switchable to each wire at output side, but in some cases a reconfiguration of the interconnection is needed to be able to make the connection. The use of MIN switches has the advantage that the size of the units can be reduced.

The digital network preferably further comprises at least one interface towards a processing or memory unit as source of one or more virtual links, the interface comprising a parametrisable serialiser/deserialiser which is controlled by the control unit. In this way, the control unit can adapt the incoming or outgoing data stream to the switching granularity.

The digital network can be a network on chip, a network on a package, or any other digital network.

The invention will be further elucidated by means of the following description and the appended drawings.
Figure 1 shows by means of an example the difference between (a) the prior art TDM approach and (b) the SDM approach of the invention.
Figure 2 shows (a) a prior art TDM network interface and (b) an SDM network interface according to the invention.
Figure 3 shows a prior art TDM router.
Figure 4 shows an embodiment of an SDM router according to the invention, having a full crossbar.
Figure 5 shows (a) an embodiment of an SDM router according to the invention, having a MIN switch, and (b) the occurrence and resolving of a blocking state.
Figure 6 shows (a) the states and (b) the structure of a switch which can be used in a router of the network according to the invention.
Figure 7 shows the evolution of the SDM switch area and maximal power consumption in function of the number of circuits that can be allocated per port.
Figure 8 shows a video chain with indication of bandwidth requirement which is used for evaluating the method and the network of the invention,
Figure 9 shows the mapping of the video application of figure 8 on a 4x4 mesh-based NoC,

### 1.GENERAL

In real-time systems, many IP-blocks are subjected to performance/throughput constraints. One very simple way of providing guarantees on throughput and latency between two IP blocks consists of establishing a virtual circuit, which is herein also called a virtual link. This virtual circuit is exclusively dedicated to communication between the two IP blocks. Multiple virtual circuits can share the same physical communication resources (e.g. lines). This concept is known as Switched Virtual Circuit (SVC).

The best-known approach to implement SVC is Time Division Multiplexing (TDM). In this scheme, the time is discretized in equally long periods of time called time-slots. During a time-slot, the available bandwidth is exclusively dedicated to a given virtual circuit. Network resources are thus shared consecutively in time among the different circuits.

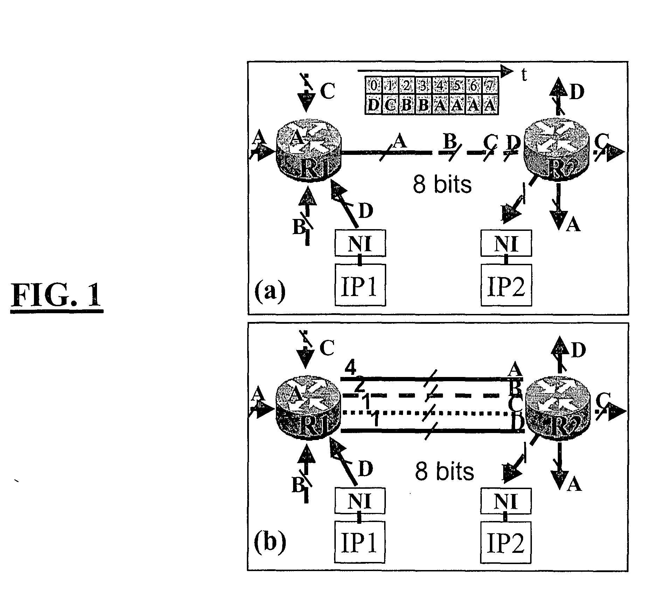

Fig. 1 (a) presents a local view of a TDM-based SVC network. IP1 and IP2 are connected to their own router through their Network Interfaces (NI). In addition to the NI port, routers R1 and R2 have four other ports (North, East, South and West) connected to adjacent routers. The focus of the figure is on the 8-bit link between router R1 and router R2. Several circuits of different bandwidth requirements are present on Fig 1: circuit A requires half of the link bandwidth, circuit B a quarter and circuit C and D, one eighth. Assuming an 8 time-slots TDM, the link is dedicated exclusively to circuit A for time-slots 4 to 7, to circuit B for time-slots 2 and 3, to circuit C for time-slot 1, and to circuit D for time-slot 0. For each time slot, router R1 looks in its Output Reservation Table (ORT) to determine which port has exclusive access to the R1-R2 link (East port). Thereafter, it configures its internal switch to perform the interconnection between the corresponding input port and the East output port.

The main problem with TDM is precisely that the switching configuration of the router has to be updated for each time-slot. Thus, local configuration memories have to be implemented within routers resulting in high area and energy overhead. As we will see, TDM also imposes tight scheduling constraints on the reservation of circuits.

The invention proposes a solution that implements SVC with Spatial-Division Multiplexing (SDM). This exploits the fact that network connections are physically made of a set of wires. SDM consists of allocating only a sub-set of the wires to a given virtual circuit. Messages are digit-serialized on a portion of the link (i.e. serialized on a group of wires). The switch configuration is set once and for all at the connection set-up. The inside-router configuration memory can therefore be avoided and the constraints on the reservation of the circuits can be relaxed.

Fig. 1 (b) presents the same configuration as for TDM but implemented with SDM. Four wires are allocated to circuit A, two to circuit B and one wire to circuits C and D. The main difference in this case is that the switch configuration remains the same for the whole circuit lifetime.

In the following, the SDM technique is explained in the context of Networks on Chip (NoCs) and an architecture for the switch inside the SDM router is proposed. This switch is the most critical component of an SDM-based NoC because its size is expected to increase. Indeed, in the extreme case, every input wire from any input port could be connected to any output port wire. Finally, the technique is evaluated on a RTL level implementation of the switch with a realistic case study. It is understood that the SDM technique can also be applied on Networks on a Package, or any other digital network.

The remainder of this detailed description of the invention is structured as follows. Section 2 presents the related work. Section 3 describes the current SVC architectures. Section 4 details our SDM-based implementation focusing particularly on the router. Section 5 presents our experimental setup based on a video application mapped on a realistic NoC platform.

### 2. RELATED WORK

In this section, related art on NoCs is discussed. The related work can be divided in NoCs providing only a Best-Effort (BE) service (i.e. no guarantees on latency and throughput) and NoCs also providing a Guaranteed Throughput (GT) service (Æthereal, Nostrum). The method of the invention can be applied in BE services as well as GT services.

A vast majority of NoC proposals rely only on a Best-Effort service. They are generally based on a packet-based switching technique: Dally [4], SPIN [6], Xpipes [8], KTH [7].

The traditional packet-switching technique consists of splitting messages that have to be sent over the network into small independently routed pieces of information called packets. Each packet is composed of a header containing the control information needed by the routing function and a payload containing the effective data. As no full path pre-establishment overhead is required, packet-switching techniques are well adapted for infrequent short messages but not for long and frequent point to point messages such as encountered in multimedia applications. Some NoCs also provide a service which ensures predictable and guaranteed communication architecture performances.

Philips was the first to propose a complete solution for a guaranteed throughput (GT) service in addition to a packet-based best effort (BE) service in their Æthereal NoC [15]. The GT service guarantees uncorrupted, lossless and ordered data transfer and both latency and throughput over a finite time interval. The GT service was originally implemented with TDM Switched Virtual Circuit (SVC). During the circuit establishment, time slots are reserved in the output reservation table of each router along the path. The unused time slots can be allocated to the BE traffic [14]. The SVC technique is particularly well adapted for long and frequent messages like multimedia data streams.

However, Philips recently removed the reservation tables from the routers because of their huge area overhead (50%) [5]. They now propose a GT service based on a packet switched technique where resources are reserved by a global scheduler inside the network interfaces. With this technique, the configuration of all routers along the path has to be sent in every packet header. It thus results in some bandwidth waste: in the worst case, one 32-bit header is sent for a 96-bit payload (25% waste). Moreover, each network interface has to centralize all the routing and scheduling information relative to the circuits it has established and it thus become much more complex and hardly scalable. The authors themselves admit that their solution is temporarily sufficient for next generation NoCs but not scalable on the long term [5].

The KTH has also proposed a guaranteed bandwidth and latency service in addition to their best-effort packet-switched service for their Nostrum Mesh Architecture [12]. This GT service is based on virtual circuits implemented on a packet-based network by exploiting an interesting characteristic of their routing policy (temporally disjoint networks). Compared to Æthereal's original design based on SVC, their solution requires less hardware as no routing tables or input/output queues are needed.

Because they all rely on a TDM-based approach, the main drawback of the above techniques is that the scheduling of communication is rather complex and the energy consumption paid for regularly changing the switch configuration is high.

The SDM approach of the invention aims to solve this problem.

### 3. MOTIVATION FOR AN SDM-BASED SWITCHED VIRTUAL CIRCUIT

As mentioned above, in the Switched Virtual Circuit (SVC) technique an application establishes a virtual circuit from source to destination and uses it exclusively. This circuit can for example be created by a routing probe injected in the network prior to the data transmission. This probe contains control information like the destination address and the bandwidth required. When a path is found, an acknowledgment probe is transmitted back to the source to initiate the data transmission. In SVC, the routing information is usually stored in a configuration memory within the router.

This section first describes the architecture and operation of the current TDM-based SVC and motivates the need for an alternative solution. Then, a detailed description of the SDM-based alternative of the invention is presented.

### 3.1. TDM-based SVC networks

The main components of a TDM-based SVC network are the network interfaces and the routers.

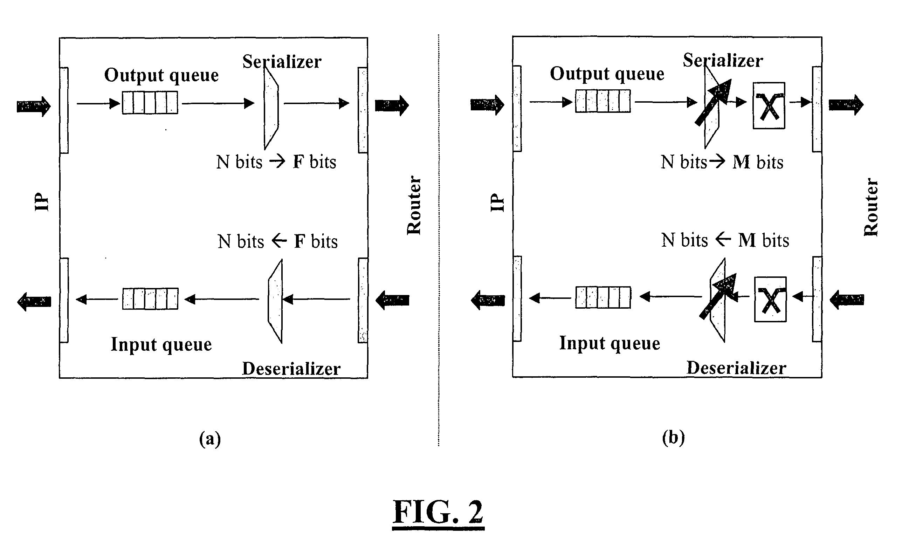

The TDM network interface is basically composed of two message queues, a serializer/deserializer and a scheduler (Fig. 2 (a)). The output message queue stores the messages coming from the IP. Those messages are then serialized into smaller data units called flits. Flits are then sent over the network. At the other end of the network, the original message is reconstructed from the incoming flits by a deserializer and is buffered in the input message queue before being delivered to the IP. A scheduler controls the emission of data in the time-slot reserved for this particular circuit. An end-to-end flow control is also generally implemented to avoid buffer saturation at the destination.

After injecting the message into the network, routers ensure that it arrives at the network interface of the destination IP.

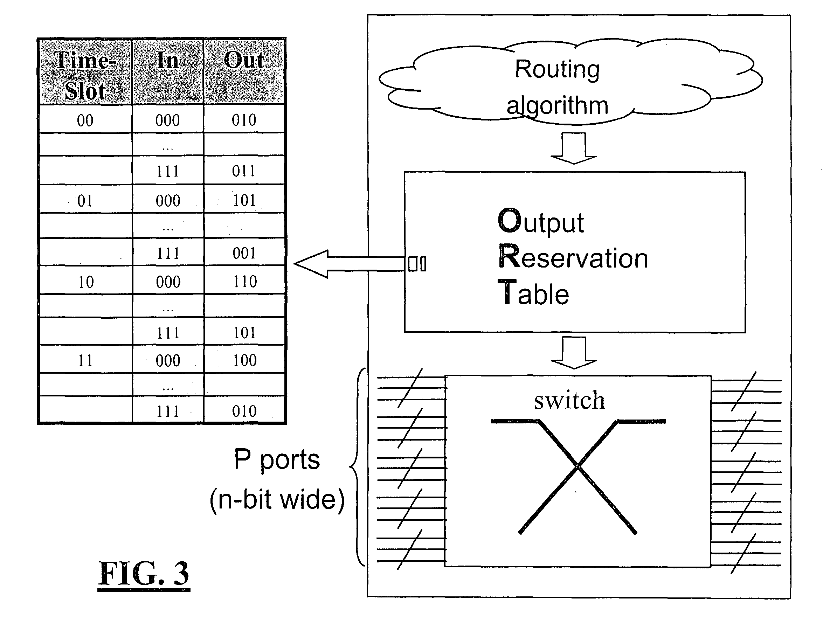

A P-ports TDM router is basically composed of a PxP switch which connects the router input ports to output ports and an Output Reservation Table (ORT) (Fig. 3). The switch is usually implemented with a full crossbar which connects the P n-bit wide input ports to the output ports. The ORT contains the switch configuration for each time-slot based on the decisions performed by the routing algorithm. It is implemented by an SRAM read at each time-slot to set-up the corresponding switch configuration.

In order to avoid data buffering inside the routers, a constraint is introduced on the time slots allocation. It consists of allocating consecutively time slots for neighboring routers. For example, if time slots T and T+1 have been reserved for a given circuit at router R1, at the next router R2, the reservation will be made for time slots T+1 and T+2. Any other configuration would require some extra buffering to temporarily store the data until the required time slot.

The consecutiveness of time-slot reservation complicates and the case where a circuit reservation is possible. When the network becomes heavily loaded, it may become impossible to make a reservation even though the required bandwidth is actually available. As a result, the routing algorithm can be forced to take a sub-optimal route which will increase circuit latency and energy consumption. A critical parameter for TDM routers is the bandwidth allocation granularity. This parameter represents the ratio between the minimal bandwidth that can be allocated to a circuit and the total link bandwidth. For example, if an audio-stream circuit requires 1 Mbps and the total link bandwidth is 32Mbps, the bandwidth granularity would be 1/32. In TDM, the bandwidth allocation granularity is fixed by the number of individual time-slots that can be allocated. A finer granularity can be obtained at the cost of more time-slots but it also implies bigger ORTs and thus higher energy consumption as this memory is read very frequently, at each time-slot. In our example, using 16 time-slots would result in smaller ORTs but at the cost of a 1 Mbps bandwidth waste for the audio-stream.

An important issue in the design of the TDM network is the duration of a time-slot. The larger the time-slot (more network cycles), the larger will be the latency for a message to arrive at its destination. Therefore, the time-slot duration is typically one network clock cycle in order to reduce the end-to-end delay of the circuit.

In conclusion, the TDM implementation suffers from drawbacks resulting from the need to regularly change the switch configuration and the tight constraints on time-slots allocation.

### 3.2. Spatial Division Multiplexing

The SDM technique of the invention comprises allocating a sub-set of the link wires to a given circuit for the whole connection lifetime. This section presents possible network interface and router architectures for implementing an SDM-based SVC in NoC.

The SDM network interface is similar to the TDM (Fig.2 (b)). The main differences concern the serialization-deserialization process. In SDM, data is serialized on a number of wires proportional to the bandwidth allocated to the circuit. Therefore, it is preferable that the output bit width of the SDM serializer is parameterizable, so that it can be adapted to the bit width allocated to the circuit. A small (n/m)x(n/m) crossbar can be used to select the wires of the n-bit port on which data will be sent.

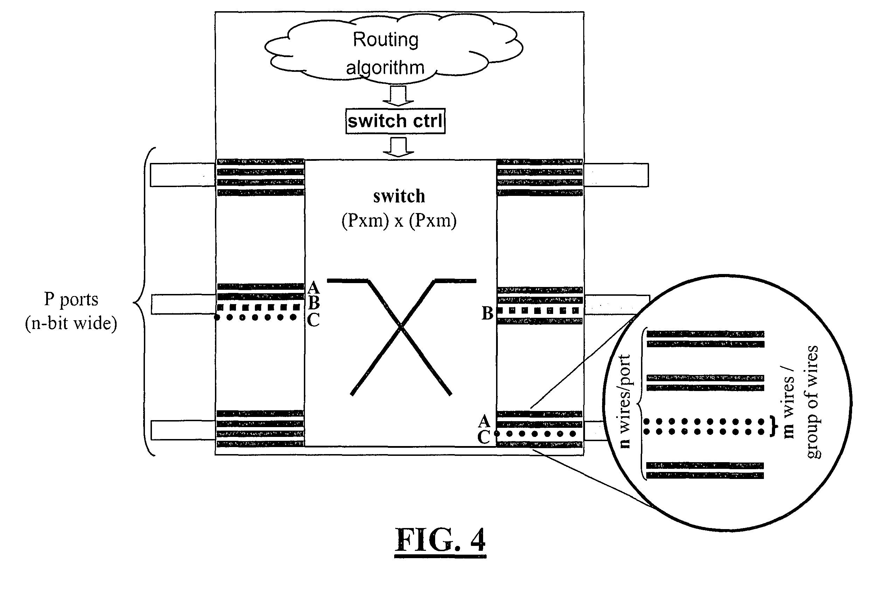

In the embodiment of Fig. 4, the SDM router comprises a switch and a switch control unit. The switch is slightly bigger than in TDM, to make it possible to interconnect any group of wires present at the router input port to another group of wires of any output port. The TDM router offering m time-slots was based on a PxP n-bit wide crossbar. For SDM, an n-bit port is divided in m individually switchable groups of wires. Therefore, for the same bandwidth and number of segments, at the same clock frequency, the number of input and output ports of the switch is increased by a factor m for SDM. However, the ports bit-width is divided by a factor m. The SDM router would thus require a (Pxm)x(Pxm) n/m-bit wide crossbar, although alternatives are possible as will appear below.

In contrast to TDM, no particular constraint exists for bandwidth allocation: any available group of wires is suitable. As a result, a shorter connection set-up time and less energy consumption for the routing algorithm are possible. Ultimately, this can also lead to finding a shorter path from source to destination.

Another advantage of SDM is that the output reservation table has to be read only once at the circuit establishment as opposed to every time-slot for TDM. As a consequence, it is no longer necessary to include the ORT inside the router and area can be saved.

Bandwidth allocation granularity is also a critical parameter for SDM routers. In SDM, a finer granularity implies either more wires per connection or a bandwidth allocation unit corresponding to less wires. In both cases, it may increase the size of the switch required inside the router, resulting in higher energy consumption. A solution for reducing the SDM router energy consumption in function of the bandwidth allocation granularity is given below in section 5.

In the extreme case of a unitary granularity i.e. when a circuit can be assigned to only one wire, the router must be able to connect any individual input wire to any output wire. For a 5x5 router with 32 bits-wide links, this would result in a 160x160 switch. To evaluate the size of a switch, a common measure is the required number of cross-points. A cross-point is a small switching element that makes or breaks the connection between one input and one output of the switch. For a NxN crossbar, the number of cross-points required evolves in O(N²). Given the number of wires that have to be interconnected in SDM, its area and energy overhead would become unaffordable.

A critical issue is thus that the switch inside the router may become bigger than for TDM. The next section explains how to efficiently tackle this problem.

### 4. DESIGN ISSUES IN BUILDING A SWITCH FOR THE SDM ROUTER

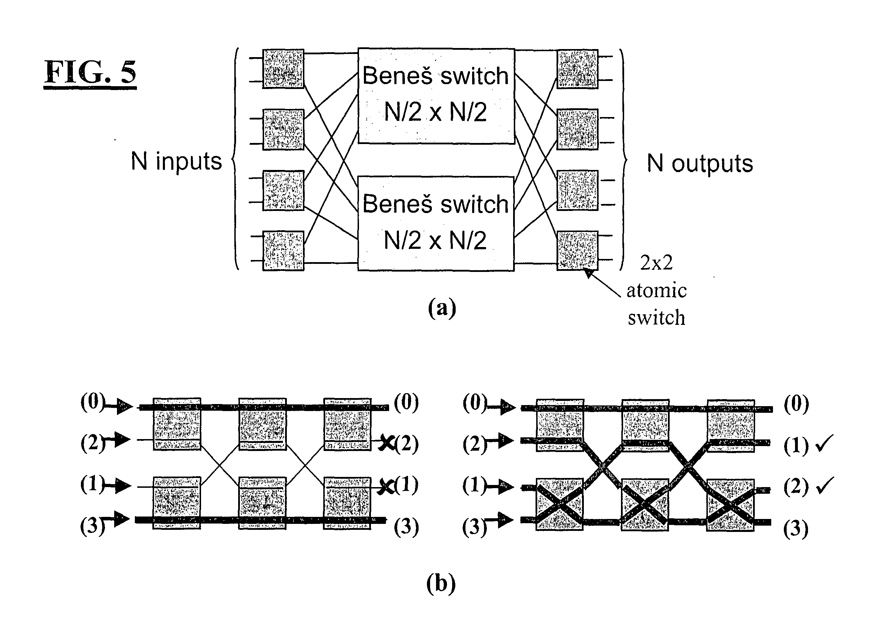

Full-crossbars have a too high complexity to be used as an SDM router's switch. An interesting alternative to a full crossbar is using Multiple stages Interconnection Network (MIN) switches. Those can reduce the cross-points cost down to O(Nlog₂(N)). The cost of using such a switch is paid either in bandwidth (longer clock cycles) or in delay (pipelined stages, multiple cycles to go through). A wide variety of MIN switches have been proposed in the literature [10] [3]. As the number of cross-points in MIN switches is reduced, some input-output connections cannot be realized anymore as one cross-point can be simultaneously required by two connections, resulting in a blocking state (e.g. in Fig. 5 (b) leftside: circuits of the input ports 1 and 2 cannot reach the requested output port, respectively 2 and 1). Table 1 presents a classification of the MIN switches depending on how easy those blocking states can be avoided. In Strictly Non Blocking (SNB) switches, any new connection from a free input to a free output can always be realized. The same condition applies to Non Blocking (NB) switches but with the restriction of carefully choosing the path taken in the switch. In Rearrangeable Non Blocking (RNB) switches, in certain situations an internal switch re-routing might be necessary to find a non-blocking solution but a solution always exists. Finally, for blocking switches, some connections can be blocked by others without any alternative solution.

**Table 1: Classification of NxN MIN switches**

| Type | Crosspoints cost | Example |
|---|---|---|
| Strictly Non Blocking (SNB) | *O*(*N^{1.5}*) | Clos |
| Non Blocking (NB) | *O*(*Nlog² N*) | Batcher-Banyan |
| Rearrangeable Non Blocking (RNB) | *O*(*2NlogN*) | Bene 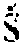 |
| Blocking switches | *O*(*NlogN*) | Banyan |

For reducing the design space, non-blocking switches are chosen here as blocking switches would result on a big loss of flexibility on the bandwidth allocation when the network is heavily loaded. Among the different implementation possibilities, SNB switches are attractive but their minimum cross-point cost is still big (O(N^{1.5})) which would lead to an area overhead comparable to that of the full crossbar.

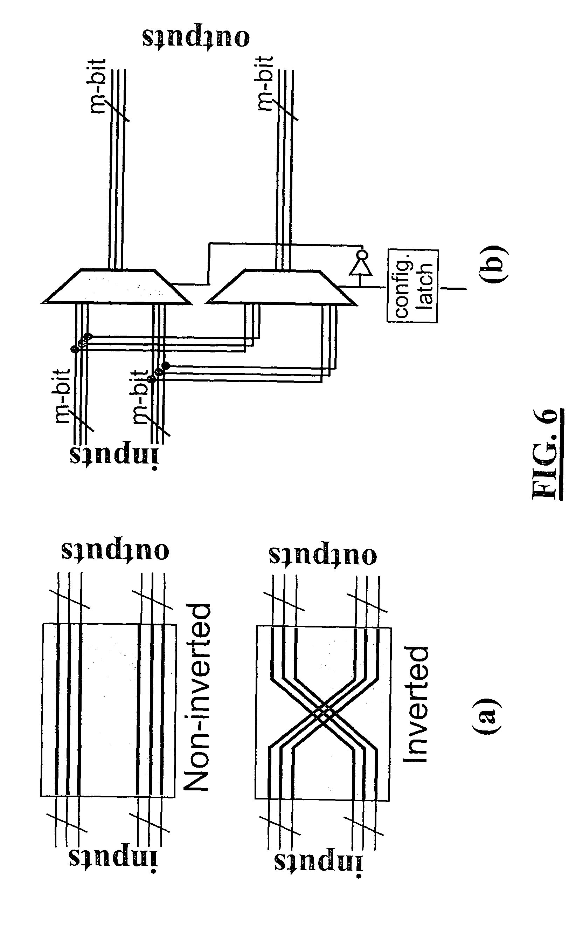

To reduce the switch overhead to a minimum, an RNB Bene 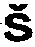 switch can be chosen, as in the embodiment of Fig. 5. The Bene 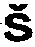 switch has a cost limited to O(2NlogN) [1]. The Bene 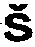 switch is built recursively as shown on Fig. 5 (a). At the top hierarchy level, the NxN switch is composed of three stages. The first and the last stages consist of N/2 2x2 switches. The intermediate stage is itself composed of two N/2 x N/2 Bene 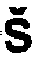 switches. The building process goes on until N=4. The NxN Bene 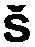 switch is thus composed of 2 log₂(N) - 1 stages of N/2 atomic switches. An atomic switch is a 2x2 m-bit-wide switch that can either forward the 2 input data to the output in the same order or invert them (see Fig. 6 (a)). The structure of an atomic switch is presented on Fig. 6 (b): it is simply composed of two 2m-to-m bits multiplexers (m being the segment bit-width) and a 1-bit latch to store the switch state (inversion or not). These switches are thus very small and fast.

Another advantage of MIN switches over crossbars is that only the really required part of the switch is activated for an input-output connection, thus saving energy. The critical path is also almost constant for every input-output couple as the number of activated atomic switches remains always the same for every possible connection and only the interconnect length varies.

The control of a MIN switch is more complex than the control of a crossbar for which only the input-output ports couple is needed to univocally determine which cross-point has to be activated. Fig. 5 (b) shows on the left the situation in which a Bene 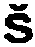 switch can block. Circuits at the input 0 and 3 set the atomic switches in such a configuration that the other connections at the input 1 and 2 cannot reach their requested outputs (respectively 2 and 1). The non-blocking configuration is presented on the right of Fig. 5 (b).

A small routing algorithm is thus needed to find a path from input to output port inside the switch and determine which atomic switches to activate. Opferman and Wu have proposed a looping algorithm that avoids any contention in the switch [13]. This recursive algorithm has a better than linear computational complexity in O((log₂N)²). The Bene 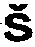 switch thus needs a dedicated switch control unit that allows to solve any potential contention within the router, reserve the route within the switch and control the corresponding atomic switches.

Choosing an RNB switch comes at the price of a potential internal switch re-routing. However, if the Bene 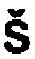 switch is not pipelined, it is possible to update the internal switch configuration within the same clock cycle, transparently for the already established connections. In the case of a pipelined switch, the re-routing is a bit more problematic as the switch has to be flushed and some extra-buffering is required.

### 5. EXPERIMENTAL RESULTS

This section presents our first experimental results concerning the SDM router architectures as the most critical architectural differences between SDM and TDM appear inside those components. Network interfaces are still on-going research but their architectures are very similar for both techniques at the exception of the serializer/deserializer which is preferably parameterizable in the SDM case.

All delay, energy consumption and area estimations have been performed after synthesis with Synopsys Physical Compiler for the 130nm UMC standard cells technology in average conditions (1.2V, 25C). The energy consumption is obtained with Power Compiler by performing a switching activity annotation of the design during a post lay-out gate-level simulation performed with Mentor Graphics Modelsim.

This section is divided into two parts. The first part evaluates the impact of the choice of granularity on our SDM router for a synthetic workload. The second part presents a proof of our concept based on a detailed comparison of SDM and TDM techniques for a video case study.

### 5.1 Impact of granularity on SDM router

In this experiment, the energy consumption and area of an SDM router is evaluated for different bandwidth granularities.

A synthetic workload is chosen corresponding to purely random traffic and a unitary activity of all the router ports. The router is clocked at 20 MHz, offering a bandwidth of 640 Mbps per port.

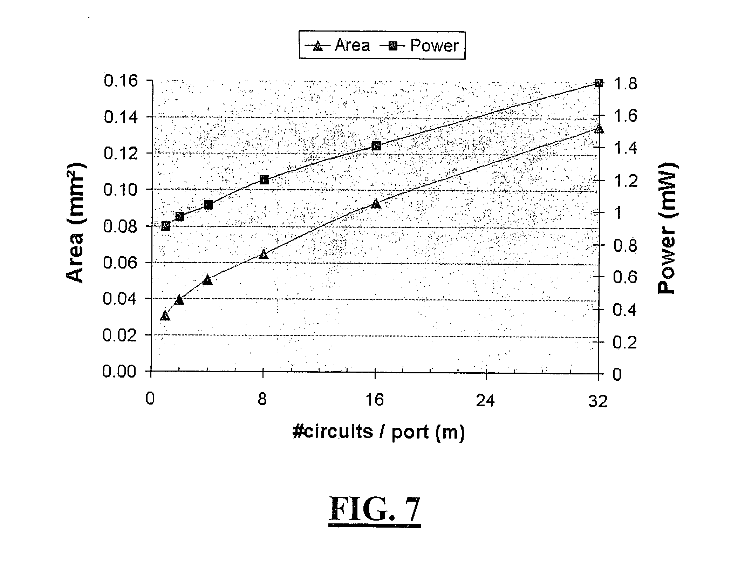

Fig.7 describes the evolution of the maximal power consumption and of the area overhead for different choices of granularity for a 32 bit-wide port. It appears that both power consumption and area are logarithmic functions of the number of circuits per port.

The maximal power consumption is reached for 32 segments per port (unitary granularity) with 1.79mW for an area of 0 135 mm².

### 5.2 Case-study : an MPEG2 video pipeline

To evaluate the performance of SDM with a realistic workload and to compare SDM and TDM in a realistic case, a workload is chosen which is extracted from a digital video processing chain. It is a representative driver application to illustrate the characteristics of the two multiplexing techniques as many NoCs will be part of a multimedia system. Our comparison is in no way restricted to only this particular case study and setup, but it gives a concrete setting to produce absolute values on power and area.

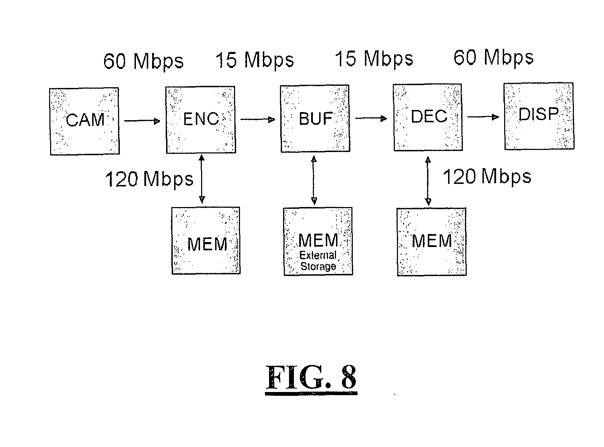

The video chain consists of a camera interface (CAM), an MPEG2 encoder and decoder (ENC and DEC), an intermediate buffer (BUF) and a display interface (DISP) (Fig. 8).

Each communication link involves different bandwidth and routing requirements. The camera produces a stream of 30 raw frames per second (4-CIF format: 704x576) which are transferred to the MPEG2 encoder. The recent history of the encoded video (a few seconds) is placed in an intermediate buffer, allowing the user to quickly play back a recent scene. The video is then read directly from this on-chip buffer and sent to the display.

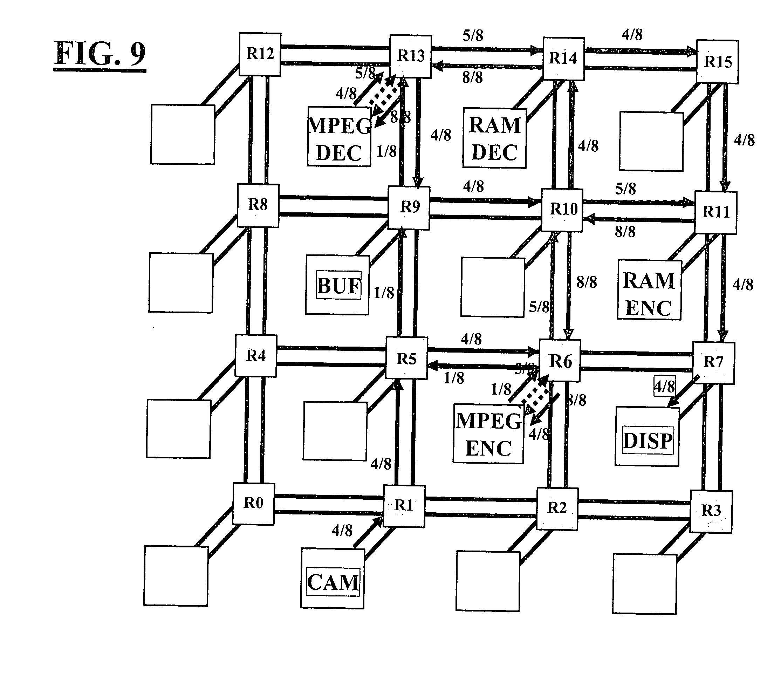

The logical view of this platform (Fig.9) shows the mapping of the video application on 4x4 mesh-based NoC. Here, only the particular case of the most activated router R6 is presented. For the sake of a fair relative comparison, RTL-level VHDL models are designed for both a TDM and an SDM implementation of the router.

In this example, the video application bandwidth requirement ranges from 15 Mbps for the compressed video stream between the encoder and the decoder to 120 Mbps for the communication between the processing nodes and their working memories. Both TDM and SDM routers are assumed to have 8-bit ports and their clock frequency is set to 15MHz bandwidth to satisfy the top bandwidth requirement of the video application.

A bandwidth allocation granularity of 8 bandwidth allocation units (i.e. time-slots or groups of wires) per link would be optimal in this example as it is the exact ratio between maximal and minimal circuit bandwidth requirements.

The TDM router implementation is based on an 8x8 8-bit-ports crossbar. This switch is controlled by an output reservation table implemented by a dual-port 256 bits SRAM (8 time-slots).

The delay and the energy consumption and area breakdown for the TDM router is presented in Table 2. As can be seen, the ORT contributes to a significant part of the overall router power consumption and area overhead (respectively 23.5% and 53%).

**Table 2: Power, area and delay estimations for router R6 implemented with TDM and SDM**

| | **TDM** | **SDM** |
|---|---|---|
| **Power consumption (*µW*)** | **325** | **301** |
| Output Reservation Table | 77 | 0 |
| Switch and other components | 248 | 301 |
| **Area (*mm*²)** | **29433** | **22410** |
| Output Reservation Table | 15536 | - |
| Switch and other components | 13897 | 22410 |
| **Critical Path (ns)** | **0.32** | **0.44** |

The 8x8 SDM router contains a 64x64 Bene 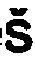 switch. Each wire of a port can carry a circuit and thus, can be switched independently. The power, area and delay breakdown of router R6 implemented with SDM is presented in Table 2. The contribution of the ORT is almost negligible as it is only accessed once, at the circuit set-up time.

The SDM technique allows a gain of 8% on energy consumption and 31% in area overhead. This comes at the cost of a larger critical path delay (+ 37%).

The energy consumption of the SDM router can be considerably improved if proper encoding techniques are used. Serializing data over the links is indeed dramatically affecting the network traffic pattern and the energy consumption savings due to correlations between bits of consecutive flits may thus be lost. However, this can be efficiently avoided by using coding techniques such as SILENT developed by Kaist [11]. This technique allows up to 50% reduction in power consumption for multimedia data traffic. As can be seen on Table 2, the SDM increases the size of the switch resulting in a higher power consumption for this component. The TDM suffers from the energy cost of its large frequently accessed ORT memory. The energy savings of SDM thus result of a trade-off between those two effects. As a designer, the most efficient multiplexing technique should be selected after a proper application characterization, especially evaluating the required bandwidth allocation granularity which is the most critical parameter.

### 6. CONCLUSION

The comparison between the two approaches for circuit-switched NoCs shows that, for the presented case study, area overhead and energy consumption are significantly improved with the SDM technique in comparison with the traditional TDM technique. SDM thus appears as a very valuable alternative to TDM that is worth to be explored in more depth as well as in a combination with TDM in a hybrid scheme.

### 7. REFERENCES

[1] V. E. Benes. On rearrangeable three-stage connecting networks. The Bell System Technical Journal, 41, 5, 1962.
[2] L. Benini and G. D. Micheli. Networks on chips: A new SoC paradigm. Computer, 35(1):70-78, Jan. 2002.
[3] C. Clos. A study of nonblocking switching networks. Bell Syst. Tech. J., 32:406-424, 1953.
[4] W. Dally. Route packets, not wires: On-Chip interconnection networks. In Proceedings of the 2001 Design Automation Conference (DAC-2001), pages 684-689, New York, June 2001. ACM Press.
[5] J. Dielissen, A. R adulescu, K. Goossens, and E. Rijpkema. Concepts and implementation of the Philips Network-on-Chip. In IP-Based SOC Design, Nov. 2003.
[6] A. Greiner and P. Guerrier. A generic architecture for on-chip packet-switched interconnections. Proc. Design Automation and Test in Europe, Feb. 2000.
[7] A. Hemani, A. Jantsch, S. Kumar, A. Postula, J. Oberg, M. Millberg, and D. Lindqvist. Network on Chip: An architecture for billion transistor era, 2000.
[8] A. Jalabert, L. Benini, S. Murali, and G. D. Micheli. xPipesComiler: a tool for instantiating application-specicifi c NoCs. Proceedings of DATE'04, Feb 2004.
[9] A. Jantsch and H. Tenhunen. Networks on Chip. Kluwer Academic Publishers, Feb 2003.
[10] L. N. Jose Duato, Sudhakar Yalamanchili. Interconnection networks, an engineering approach. IEEE Computer Society Press, 1998.
[11] K. Lee. SILENT : Serialized low energy transmission coding for on-chip interconnection networks. IEEE International Conference on Computer Aided Design (ICCAD) 2004, pages 448-451, Nov. 2004.
[12] M. Millberg, E. Nilsson, R. Thid, and A. Jantsch. Guaranteed bandwidth using looped containers in temporally disjoint networks within the nostrum network on chip. Proceedings of DAC 2004, pages 890-895, 2004.
[13] D. C. Opferman and N. T. Tsao-Wu. On a class of rearrangeable switching networks; part I: Control algorithms; part II: Enumeration studies and fault diagnosis. Bell System Technical Journal, 50(5):1579-1618, May-June 1971.
[14] E. Rijpkema, K. Goossens, J. D. A. R adulescu, J. van Meerbergen, P. Wielage, and E. Waterlander. Trade offs in the design of a router with both guaranteed and best-effort services for networks on chip. IEE Proceedings: Computers and Digital Technique, 150(5):294-302, Sept. 2003.
[15] E. Rijpkema, K. Goossens, and P. Wielage. A router architecture for networks on silicon. In Proceedings of Progress 2001, 2nd Workshop on Embedded Systems, Veldhoven, the Netherlands, Oct. 2001.

## Claims

1. Method for managing a plurality of virtual links (A-D) from at least two different sources (IP1, IP2) shared on a physical electrical communication line extending between a first port of a first unit (R1) and a second port of a second unit (R2), said first and second ports forming one of a plurality of input/output ports of the first and second units, the communication line having a total bit width n which is the number of physical single bit wide connections between the first and second ports, **characterised in that** the method comprises the steps of:
a) defining a predetermined switching granularity m smaller than the total bit width n, said switching granularity being the smallest number of single bit wide connections of said communication line allocatable to a group of virtual links,
b) establishing a first situation in which the total bit width of the communication line is at least partly occupied by a first group of one or more virtual links,
c) using said switching granularity m, configuring a second situation in which a first portion of the total bit width is allocated to the first group of one or more virtual links and a second portion of the total bit width is allocated to a second group of one or more virtual links, the second portion non-overlapping the first portion,
d) switching from the first situation to the second situation.

2. The method of claim 1, further comprising the step of determining the first and second portions of the total bit width on the basis of a bandwidth which is required on the first and second groups of virtual links.

3. The method of claim 1 or 2, **characterised in that** said first group of virtual links and/or said second group of virtual links each comprise a single virtual link.

4. The method of any one of the claims 1-3, **characterised in that** said first group of virtual links is shared on said first portion of the total bit width using time-division multiplexing, and/or said second group of virtual links is shared on said second portion of the total bit width using time-division multiplexing.

5. The method of any one of the claims 1-4, **characterised in that** the bit width occupied by the first group of virtual links is reduced in step d) to make space for the second group of virtual links.

6. The method of any one of the claims 1-5, further comprising the steps of:
e) terminating the first or the second group of virtual links,
f) enlarging the bit width occupied by the remaining group of virtual links.

7. A digital network comprising a physical electrical communication line extending between a first port of a first unit (R1) and a second port of a second unit (R2), said first and second ports forming one of a plurality of input/output ports of the first and second units, the communication line having a total bit width n which is the number of physical single bit wide connections between the first and second ports, and a control unit for managing a plurality of virtual links (A-D) from at least two different sources (IP1, IP2) shared on said physical communication line **characterised in that** said control unit is provided for managing said virtual links (A-D) according to a predetermined switching granularity m smaller than the total bit width n, said switching granularity being the smallest number of single bit wide connections allocatable to a group of virtual links, said control unit being provided for:
- establishing a first situation in which the total bit width of the communication line is at least partly occupied by a first group of one or more virtual links,
- configuring a second situation in which a first portion of the total bit width is allocated to the first group of one or more virtual links and a second portion of the total bit width is allocated to a second group of one or more virtual links, the second portion non-overlapping the first portion, and
- switching from the first situation to the second situation.

8. The digital network of claim 7, **characterised in that** the switching granularity m is 1.

9. The digital network of claim 7 or 8, **characterised in that** the number of input/output ports is p, the first and second units comprising (pxm)x(pxm) crossbars.

10. The digital network of claim 7 or 8, **characterised in that** the first and second units comprise non-blocking multiple stages interconnection network switches.

11. The digital network of any one of the claims 7-10, further comprising at least one interface towards a processing or memory unit as source of one or more virtual links, the interface comprising a parametrisable serialiser/deserialiser of which the bit width is adaptable under control of said control unit, so that its bit width can be adapted to the bit width allocated to the circuit.

12. The digital network of any one of the claims 7-11, **characterised in that** it is a network on chip.

## Patentansprüche

1. Verfahren zum Verwalten von mehreren virtuellen Verbindungen (A bis D) von mindestens zwei verschiedenen Quellen (IP1, IP2), welche auf einer physikalischen, elektrischen Kommunikationsleitung gemeinsam genutzt werden, welche sich zwischen einem ersten Port einer ersten Einheit (R1) und einem zweiten Port einer zweiten Einheit (R2) erstreckt, wobei der erste und der zweite Port einen von mehreren Eingangs-/Ausgangs-Ports der ersten und der zweiten Einheit bilden, wobei die Kommunikationsleitung eine Gesamtbitbreite von n aufweist, welche die Anzahl physikalischer Verbindungen mit einer Bitbreite von eins zwischen dem ersten und dem zweitem Port ist, **dadurch gekennzeichnet, dass** das Verfahren die folgenden Schritte umfasst:
a) Definieren einer vorbestimmten Schaltgranularität m, welche kleiner als die Gesamtbitbreite n ist, wobei die Schaltgranularität die kleinste Anzahl von Verbindungen mit einer Bitbreite von eins der Kommunikationsleitung ist, welche einer Gruppe der virtuellen Verbindungen zuteilbar ist,
b) Herstellen einer ersten Situation, bei welcher die Gesamtbitbreite der Kommunikationsleitung zumindest teilweise von einer ersten Gruppe einer oder mehrerer virtueller Verbindungen belegt ist,
c) Konfigurieren einer zweiten Situation unter Verwendung der Schaltgranularität m, bei welcher ein erster Abschnitt der Gesamtbitbreite zu der ersten Gruppe einer oder mehrerer virtueller Verbindungen zugeteilt ist und ein zweiter Abschnitt der Gesamtbitbreite zu einer zweiten Gruppe einer oder mehrerer virtueller Verbindungen zugeteilt ist, wobei der zweite Abschnitt den ersten Abschnitt nicht überlappt,
d) Schalten von der ersten Situation auf die zweite Situation.

2. Verfahren nach Anspruch 1, weiterhin umfassend den Schritt des Bestimmens des ersten und des zweiten Abschnitts der Gesamtbitbreite auf der Grundlage einer Bandbreite, welche für die erste und die zweite Gruppe virtueller Verbindungen erforderlich ist.

3. Verfahren nach Anspruch 1 oder 2, **dadurch gekennzeichnet, dass** die erste Gruppe virtueller Verbindungen und/oder die zweite Gruppe virtueller Verbindungen jeweils eine einzelne virtuelle Verbindung umfassen.

4. Verfahren nach einem der Ansprüche 1 bis 3, **dadurch gekennzeichnet, dass** die erste Gruppe virtueller Verbindungen auf dem ersten Abschnitt der Gesamtbitbreite unter Verwendung eines Zeitmultiplexbetriebs gemeinsam genutzt wird und/oder die zweite Gruppe virtueller Verbindungen auf dem zweiten Abschnitt der Gesamtbitbreite unter Verwendung eines Zeitmultiplexbetriebs gemeinsam genutzt wird.

5. Verfahren nach einem der Ansprüche 1 bis 4, **dadurch gekennzeichnet, dass** die Bitbreite, welche von der ersten Gruppe virtueller Verbindungen belegt wird, in Schritt d) reduziert wird, um für die zweite Gruppe virtueller Verbindungen Platz zu machen.

6. Verfahren nach einem der Ansprüche 1 bis 5, weiterhin die folgenden Schritte umfassend:
e) Terminieren der ersten oder der zweiten Gruppe virtueller Verbindungen,
f) Vergrößern der Bitbreite, welche von der verbleibenden Gruppe virtueller Verbindungen belegt wird.

7. Digitales Netz, welches eine physikalische, elektrische Kommunikationsleitung, welche sich zwischen einem ersten Port einer ersten Einheit (R1) und einem zweiten Port einer zweiten Einheit (R2) erstreckt, wobei der erste und der zweite Port einen von mehreren Eingangs-/Ausgangs-Ports der ersten und der zweiten Einheit bilden, wobei die Kommunikationsleitung eine Gesamtbitbreite n aufweist, welche die Anzahl physikalischer Verbindungen mit einer Bitbreite von eins zwischen dem ersten und dem zweiten Port ist, und eine Steuerungseinheit zum Verwalten mehrerer virtueller Verbindungen (A bis D) von mindestens zwei verschiedenen Quellen (IP1, IP2) umfasst, welche auf der physikalischen Kommunikationsleitung gemeinsam genutzt werden, **dadurch gekennzeichnet, dass** die Steuerungseinheit zum Verwalten der virtuellen Verbindungen (A bis D) gemäß einer vorbestimmten Schaltgranularität m, welcher kleiner als die Gesamtbitbreite n ist, bereitgestellt wird, wobei die Schaltgranularität die kleinste Anzahl von Verbindungen mit einer Bitbreite von eins ist, welche zu einer Gruppe virtueller Verbindungen zuteilbar ist, wobei die Steuerungseinheit für Folgendes bereitgestellt wird:
- Herstellen einer ersten Situation, bei welcher die Gesamtbitbreite der Kommunikationsleitung zumindest teilweise von einer ersten Gruppe einer oder mehrerer virtueller Verbindungen belegt ist,
- Konfigurieren einer zweiten Situation, bei welcher ein erster Abschnitt der Gesamtbitbreite zu der ersten Gruppe einer oder mehrerer virtueller Verbindungen zugeteilt ist und ein zweiter Abschnitt der Gesamtbitbreite zu einer zweiten Gruppe einer oder mehrerer virtueller Verbindungen zugeteilt ist, wobei der zweite Abschnitt den ersten Abschnitt nicht überlappt, und
- Schalten von der ersten Situation auf die zweite Situation.

8. Digitales Netz nach Anspruch 7, **dadurch gekennzeichnet, dass** die Schaltgranularität m 1 beträgt.

9. Digitales Netz nach Anspruch 7 oder 8, **dadurch gekennzeichnet, dass** die Anzahl von Eingangs-/Ausgangs-Ports p beträt, wobei die erste und die zweite Einheit (p x m) x (p x m) Koordinatenschalter umfassen.

10. Digitales Netz nach Anspruch 7 oder 8, **dadurch gekennzeichnet, dass** die erste und die zweite Einheit blockierungsfreie, mehrstufige Verbindungsnetzwerkschalter umfassen.

11. Digitales Netz nach einem der Ansprüche 7 bis 10, weiterhin umfassend mindestens eine Schnittstelle zu einer Verarbeitungs- oder Speichereinheit als Quelle einer oder mehrerer virtueller Verbindungen hin, wobei die Schnittstelle einen parametrierbaren Parallel-Serien-Umsetzer/Serien-Parallel-Umsetzer umfasst, dessen Bitbreite unter Steuerung der Steuerungseinheit anpassbar ist, so dass seine Bitbreite an die Bitbreite angepasst werden kann, welche dem Schaltkreis zugeteilt ist.

12. Digitales Netz nach einem der Ansprüche 7 bis 11, **dadurch gekennzeichnet, dass** es ein chipintegriertes Netz ist.

## Revendications

1. Procédé de gestion d'une pluralité de liaisons virtuelles (A-D) de deux sources différentes (IP1, IP2) pour le partage d'une ligne de communication électrique physique s'étendant entre un premier port d'une première unité (R1) et un deuxième port d'une deuxième unité (R2), lesdits premier et deuxième ports formant un d'une pluralité de ports d'entrée / de sortie des première et deuxième unités, la ligne de communication ayant une largeur totale en bits n qui est le nombre de connexions physiques d'une largeur d'un bit entre les premier et deuxième ports, **caractérisé en ce que** le procédé comprend les étapes suivantes :
a) définir une granularité de commutation prédéterminée m inférieure à la largeur totale en bits n, ladite granularité de commutation étant le plus petit nombre de connexions d'une largeur d'un bit de ladite ligne de communication pouvant être alloués à un groupe de liaisons virtuelles,
b) établir une première situation dans laquelle la largeur totale en bits de la ligne de communication est au moins en partie occupée par un premier groupe d'une ou plusieurs liaisons virtuelles,
c) configurer, en utilisant ladite granularité de commutation m, une deuxième situation dans laquelle une première partie de la largeur totale en bits est allouée au premier groupe d'une ou plusieurs liaisons virtuelles et une deuxième partie de la largeur totale en bits est allouée à un deuxième groupe d'une ou plusieurs liaisons virtuelles, la deuxième partie ne recouvrant pas la première partie,
d) commuter de la première situation à la deuxième situation.

2. Procédé selon la revendication 1, comprenant en outre l'étape consistant à déterminer les première et deuxième parties de la largeur totale en bits sur la base d'une bande passante qui est requise sur les premier et deuxième groupes de liaisons virtuelles.

3. Procédé selon la revendication 1 ou 2, **caractérisé en ce que** ledit premier groupe de liaisons virtuelles et / ou ledit deuxième groupe de liaisons virtuelles comprennent chacun une seule liaison virtuelle.

4. Procédé selon l'une quelconque des revendications 1-3, **caractérisé en ce que** ledit premier groupe de liaisons virtuelles est partagé sur ladite première partie de la largeur totale en bits en utilisant un multiplexage par répartition dans le temps, et / ou ledit deuxième groupe de liaisons virtuelles est partagé sur ladite deuxième partie de la largeur totale en bits en utilisant un multiplexage par répartition dans le temps.

5. Procédé selon l'une quelconque des revendications 1 - 4, **caractérisé en ce que** la largeur en bits occupée par le premier groupe de liaisons virtuelles est réduite à l'étape d) pour faire de la place pour le deuxième groupe de liaisons virtuelles.

6. Procédé selon l'une quelconque des revendications 1 - 5 comprenant en outre les étapes suivantes :
e) mettre fin au premier ou au deuxième groupe de liaisons virtuelles,
f) élargir la largeur en bits occupée par le groupe restant de liaisons virtuelles.

7. Réseau numérique comprenant une ligne de communication électrique physique s'étendant entre un premier port d'une première unité (R1) et un deuxième port d'une deuxième unité (R2), lesdits premier et deuxième ports formant un d'une pluralité de ports d'entrée / de sortie des première et deuxième unités, la ligne de communication ayant une largeur totale en bits n qui est le nombre de connexions physiques d'une largeur d'un bit entre les premier et deuxième ports, et une unité de contrôle pour gérer une pluralité de liaisons virtuelles (A-D) d'au moins deux sources différentes (IP1, IP2) partagées sur ladite ligne de communication, **caractérisé en ce que** ladite unité de contrôle est prévue pour gérer lesdites liaisons virtuelles (A - D) selon une granularité de commutation prédéterminée m inférieure à la largeur totale en bits n, ladite granularité de commutation étant le plus petit nombre de connexions d'une largeur d'un bit pouvant être alloués à un groupe de liaisons virtuelles, ladite unité de contrôlé étant prévue pour:
- établir une première situation dans laquelle la largeur totale en bits de la ligne de communication est au moins en partie occupée par un premier groupe d'une ou plusieurs liaisons virtuelles,
- configurer une deuxième situation dans laquelle une première partie de la largeur totale en bits est allouée au premier groupe d'une ou plusieurs liaisons virtuelles et une deuxième partie de la largeur totale en bits est allouée à un deuxième groupe d'une ou plusieurs liaisons virtuelles, la deuxième partie ne recouvrant pas la première partie, et
- commuter de la première situation à la deuxième situation.

8. Réseau numérique selon la revendication 7, **caractérisé en ce que** la granularité de commutation m est 1.

9. Réseau numérique selon la revendication 7 ou 8, **caractérisé en ce que** le nombre de ports d'entrée / de sortie est p, les première et deuxième unités comprenant (pxm) x (pxm) barres croisées (crossbars).

10. Réseau numérique selon la revendication 7 ou 8, **caractérisé en ce que** les première et deuxième unités comprennent des commutateurs non bloquants de réseau d'interconnexion à étages multiples.

11. Réseau numérique selon l'une quelconque des revendications 7-10, comprenant en outre au moins une interface vers une unité de traitement ou de mémoire comme source d'une ou plusieurs liaisons virtuelles, l'interface comprenant un sérialiseur / désérialiseur paramétrable dont la largeur en bits peut être adaptée sous le contrôle de ladite unité de contrôle, de sorte que sa largeur en bits peut être adaptée à la largeur en bits allouée au circuit.

12. Réseau numérique selon l'une quelconque des revendications 7-11, **caractérisé en ce qu'**il est un réseau sur puce.
